# EUROPEAN PATENT SPECIFICATION

(11) **EP 2 558 752 B1**
(45) Date of publication and mention of the grant of the patent: **16.09.2015**
(21) Application number: 11769284.8
(22) Date of filing: 31.03.2011
(51) Int. Cl.: F16K 11/072, F16K 15/03, F16K 37/00, F02M 25/07

(54) **MULTIFUNCTION VALVE**
MULTIFUNKTIONSVENTIL
SOUPAPE MULTIFONCTION

(30) Priority: 14.04.2010 US 323994 P
(43) Date of publication of application: 20.02.2013
(73) Proprietor: BorgWarner Inc., Auburn Hills, MI 48326 (US)
(72) Inventor: BUSATO, Murray, F., Clinton Township, MI 48035 (US); PETERSON, Todd, R., New Boston, MI 48164 (US); KEEFOVER, Robert, D., Lake Orion, MI 48360 (US); KIENER, Jorn, Timm, 71642 Ludwigsburg (DE)
(74) Representative: Hoefer & Partner Patentanwälte mbB
(86) International application number: PCT/US2011/030750
(87) International publication number: WO 2011/130015

(56) References cited:
- EP-A1- 1 002 947
- DE-A1-102004 055 846
- JP-U- S4 816 238
- JP-U- S5 730 363
- US-A- 5 740 785
- US-A1- 2005 028 796
- US-A1- 2009 293 963
- US-B2- 7 007 680

## Description

### TECHNICAL FIELD

The field to which the disclosure generally relates to includes multifunction valves, engine breathing systems including multifunctional valves and methods of making and using multifunctional valves. Such engine brathing systems including mutlifunctional valves are known e.g. from US 2005/0028796 A1, US 5,740,785 A1, JP S57 30363 U, JP S48 16238 U or DE 102004 055846 A1.

### BACKGROUND

Control of vehicle exhaust emissions is a mandatory requirement in most countries. Oxides of Nitrogen (NOx) and particulate matter are two components of the engine exhaust emissions that must be controlled.

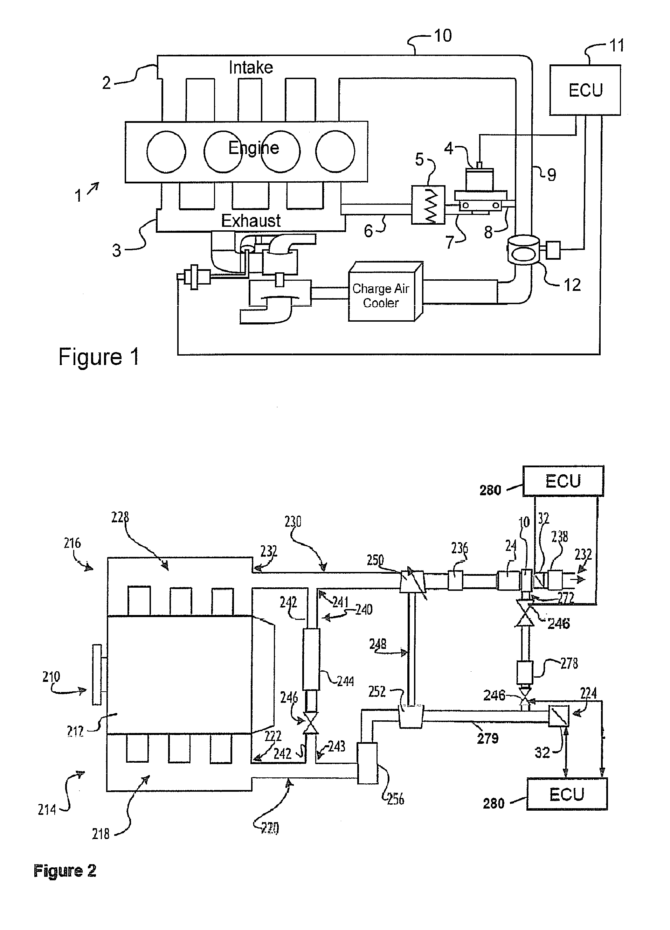

Formation of NOx will occur at higher engine combustion temperatures and particulates will form at lower combustion temperatures. A system, referred to as the exhaust gas recirculation (EGR) system, has been developed to control combustion temperatures and control NOx and particulate emissions. A schematic of a typical system is shown in Figure 1. A portion of the exhaust gas is recirculated back to the intake manifold where it will be combined with incoming air and fuel. The exhaust gas portion of the mixture does not support combustion and when this mixture is compressed and ignited, in the cylinder, the inert exhaust gas will control the combustion temperature and limit the formation of NOx and particulate in the exhaust.

Referring to Figure 1, the engine (1) has an intake manifold (2) and an exhaust manifold (3). The EGR system consists of an exhaust gas recirculation (EGR) valve (4) that controls the flow of exhaust gas to intake manifold (2). An EGR cooler (5) is used to reduce the temperature of the exhaust gas. Conduits (6), (7), (8), (9) and (10) provide the interconnection between the exhaust manifold (3), EGR cooler (5), EGR valve (4), and intake manifold (2). The system shows uses of an electrically controlled EGR valve. An electronic control unit (ECU) (11) will provide a signal that will control the opening/closing of the valve. As the EGR valve opens and closes it will increase or decrease the flow rate of exhaust gas to the intake manifold. It is also typical to have a throttle valve (12) to control airflow into the intake manifold.

The required EGR flow rate is dependent upon several factors that include the displacement of the engine and the pressure differential between the exhaust and the intake system.

Referring to Figure 1, the system will operate in the following manner. The ECU (11) will be programmed with a map of engine operating conditions and a desired EGR flow for each condition. EGR valve (4) has a position sensor that is connected to the ECU (11) and it will provide an output signal that is relative to the valve position and flow through the valve. The desired flow is translated to a position sensor output signal and an actuator control signal. The control signal is applied to the actuator of the EGR valve (4), causing the valve to move away from the valve seat and allow exhaust gas to flow from the exhaust manifold (3) to intake manifold (2). The position sensor and its output signal are part of a closed loop control system for the EGR valve. The position sensor will provide feedback to the ECU that will indicate if it has achieved the desired position and related flow. The ECU will adjust the actuator control signal to achieve or maintain the desired valve position. The recirculated exhaust gas will mix with the incoming air and be distributed to the engine cylinders by the intake manifold. The mixture of exhaust gas, air and fuel will determine combustion temperature and control of the level of NOx and particulate matter.

A number of electric actuators such as linear solenoids, D. C. motors, torque motors, and stepper motors may be used to actuate the EGR valve. Valve position sensing can also be achieved by alternate methods such as counting steps of a stepper motor or by regulating vacuum to a pneumatically controlled EGR valve.

A number of valve types such as throttle, poppet or flap may be used to control the flow of exhaust gas.

Emission levels are reviewed and periodically reduced. New EGR systems may be required to control the lower emission limits. Figure 2 shows a schematic of an engine system 210 and associated intake air induction system 214 and exhaust system 216.

Engine system 210 also has turbo charger for compressing the intake air and boosting the pressure within intake manifold 218. The turbocharger receives exhaust gas within turbine 250 causing it to rotate. A shaft 248 connects the turbine 250 and compressor 252. Compressor 252 receives the incoming air at approximately ambient pressure and will increase the pressure.

Air is delivered to the engine via a path including air inlet 224, throttle valve 32, conduit 279, compressor 252, intercooler 256, conduit 220, intake manifold inlet 222, and intake manifold 218.

Engine exhaust gas is removed via a path including exhaust manifold 228, exhaust manifold outlet 232, conduit 230, turbine 250, after treatment devices 236, 24, throttle valve 32, and outlet 232.

Exhaust Gas Recirculation (EGR) may be provided by several methods. A first method will direct EGR to the intake manifold 218 via a path including exhaust manifold 228, exhaust manifold outlet 232, conduit 230, conduit 242, EGR cooler 244, EGR valve 246, EGR outlet 243, conduit 220, intake manifold inlet 222, and intake manifold 218. The exhaust gas is taken between the exhaust manifold 228 and turbine 250 where the exhaust pressure will be high. This system is commonly known as the high pressure EGR system. Optionally, an EGR cooler bypass conduit and associated valve may be provided to selectively direct at least a portion of the EGR gas around the EGR cooler 224.

A second method of providing EGR will direct EGR to the intake manifold 218 via a path including exhaust manifold 228, exhaust manifold outlet 232, conduit 230, turbine 250, after treatment devices 236, 24, conduit 272, EGR valve 246, EGR cooler 278, conduit 279, compressor 252, intercooler 256, conduit 220, intake manifold inlet 222, and intake manifold 218. The exhaust gas is taken after turbine 250 where the exhaust pressure will be low. The system is commonly known as the low pressure EGR system. During some engine operating conditions, the exhaust pressure is too low to supply adequate EGR flow. A throttle valve 32 must be used to develop an adequate pressure differential across the EGR valve 246 to provide the required flow.

The EGR valve 246 may be located on the hot side (exhaust side) of the EGR cooler 278 or the cold side (intake side) of the EGR cooler.

FIG. 2 shows the location of both hot side and cold side EGR valves but typically only one EGR valve would be used for the first or second EGR method of providing EGR. The throttle valve 32 may be located on the exhaust side, as shown, near exit 232, or on the air inlet side near air inlet 224. The system shows both locations but typically only one throttle valve is required for the EGR system.

Several types of valves may be used for the EGR valve 246 and exhaust throttle 32 functions. For example: a poppet style, flat style, or throttle style valve could be capable of providing these functions. These valves may be actuated by several different types of actuators. For example: vacuum/pressure motors, D.C. motor, torque motor, stepper motor, or linear solenoid type actuators could be capable of actuating the valve.

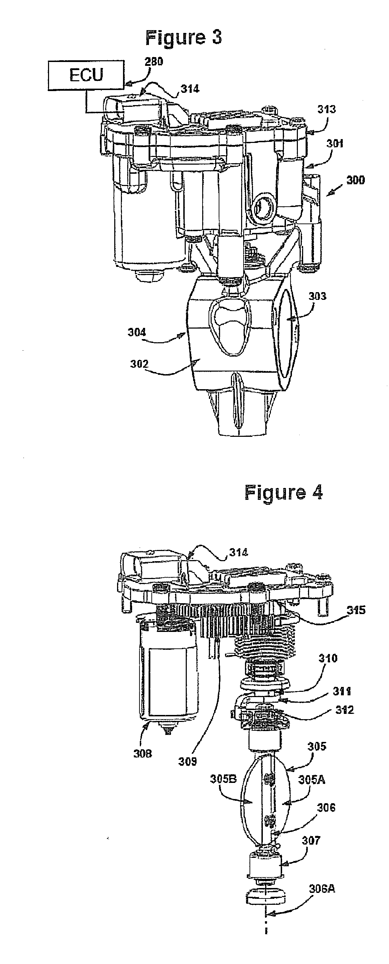

Figure 3 shows a typical throttle valve 300 that may be used as an EGR valve 246 or exhaust throttle 32. Figure 4 shows the internal components of throttle valve 300. The throttle valve 300 has an actuator housing 301 and a valve housing 302. Valve housing 302 has an inlet 303, for receiving a fluid, and an outlet 304 for delivering the fluid. A throttle valve 305 is disposed within valve housing 302 between the inlet and outlet. Fluid flow is controlled by the radial clearance between throttle plate 305 and valve housing 302. Throttle valve plate 305 is attached to a rotatable valve shaft 306 that is supported by bearings 307 installed in the valve housing. It may be noted the valve shaft 306 and valve plate 305 are connected at a central location of throttle plate 305. The areas 305A and 305B of throttle valve plate 305, extending on either side of the longitudinal axis 306A of valve shaft 306 are approximately equal.

The actuator housing 301 contains a D.C. motor actuator 308 that is operably connected to the valve shaft 306 by gear train 309, actuator shaft 310, and levers 311 and 312. The D.C. motor actuator is controlled by a signal from an engine control unit (ECU) 280 (also shown in Figure 2). A cover 313 is attached to the actuator housing 301. The cover includes an electrical-connector-and-lead-frame 314 for receiving a control signal from the ECU 280 and connecting it to the D.C. motor 308.

The D.C. motor 308 will receive the control signal from the ECU 280 and will force the valve shaft 306 and valve plate 305 to rotate to a predetermined position between the valve closed and open positions. The electrical connector and lead frame 314 are also connected to a position sensor 315 located within EGR throttle valve 300. The position sensor 315 provide a feedback voltage position signal to the ECU 280 to determine valve position that may indicate fluid flow to outlet 304.

The throttle valve 32 and EGR valve 246 have been shown in Figure 2 as two separate components having separate actuators and controls. The invention described herein is a unique multifunction valve that combines the function of the EGR valve and throttle valve and provides for common actuation and control. Another aspect of the invention is that it may be used in various locations of the engine and EGR system such as the air inlet side or the exhaust outlet side of the engine and EGR system.

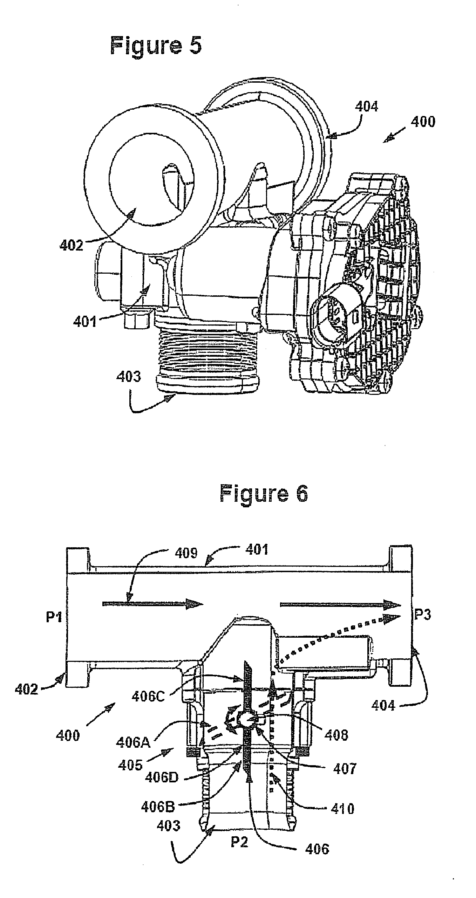

Figures 5 and 6 show a valve assembly 400. The valve assembly has a housing 401 with three ports 402, 403 and 404. Each of the ports may receive or deliver a fluid such as air and exhaust gas or a combination of such fluids. The first port 402 may receive a first fluid such as air 409, shown by the solid line, and the second port 403 may receive a second fluid such as exhaust gas 410, shown by the small dashed line. The third port 404 may receive the combined fluids from ports 402 and 403 and deliver it to the desired location. For example, the combined air and exhaust gas may be delivered to an engine's intake manifold to control emissions of NOx and particulate matter.

Referring to Figure 6, a valve may be installed in either port 402 or 403 for controlling the fluid flow rate through the port. A throttle style valve 405 will be used for this description. A throttle plate 406 is installed in port 403 and is formed to fit the port to essentially seal and block flow through the port. The closed throttle plate position 406A is shown by dotted lines and the open throttle plate position 406B is shown by solid lines.

A valve shaft 407 is installed through the wall of port 403 and extends within the port. As noted with throttle valve 300 in Figures 3 and 4, the valve shaft 407 and throttle plate 406 are connected at a central location of throttle plate 406. The areas 406C and 406D of throttle plate 406, extending on either side of the longitudinal axis 408, of valve shaft 407, are approximately equal. Throttle plate 406 is fastened to valve shaft 407 using suitable means such as screws, welding, brazing or rivets. The valve shaft may be rotated about its axis 408 to cause the throttle plate to move from the closed throttle position 406A to the fully open throttle position 406B to allow higher fluid flow through port 403. The fluid flow through port 403 will combine with the fluid flow through port 402 and flow to port 404 for delivery to the desired location. The fluid flow through port 403 will depend upon the position of throttle plate 406. For example, if the throttle plate is near the closed throttle position, a small amount of the fluid (through port 403) will be contained within the combined fluid flow. If the throttle plate is near the open position, a greater amount of the fluid (through port 403) will be contained within the combined fluid flow.

The maximum flow rate, delivered to port 404, is determined in part by the pressure P1, measured at port 402, the pressure P2, measured at port 403, and the pressure P3 measure at port 404. The maximum fluid flow rate, through port 403, will occur when the throttle plate 406 is in the fully open position 406B. The pressure differential, P3 - P2, measured between port 403 and port 404 will also determine the maximum flow rate through port 403. The pressure differential will diminish as the throttle plate 406 is rotated towards the open position 406B. It may be desirable to increase flow through port 403. In the valve arrangement shown, this can be accomplished by restricting a portion or all of the fluid flow through port 402. This will result in an increased pressure differential (P2-P3), between port 403 and 404,that will cause higher fluid flow through port 403.

Several methods may be used to restrict flow through port 402. A first method may be the addition of a separate valve connected to port 402 by suitable means such as bolts. A second method of restricting fluid flow through port 402 may be the addition of a second throttle valve within port 402, similar to the valve installed within port 403. As mentioned earlier, each of the first or second methods will require a separate actuator and connection to a controller for controlling the valve movement and position. A more desirable method for restricting fluid flow through port 402 may be the addition of a second valve that is operated by the same actuator and controller used to operate the valve located within port 403. This would eliminate the need for a second actuator and second connection to a controller (or a second controller). It will also reduce the complexity of the control strategy by having only one device to control.

### SUMMARY OF EXEMPLARY EMBODIMENTS OF THE INVENTION

One embodiment includes product comprising a valve housing constructed and arranged to have a first fluid port, a second fluid port, and a third fluid port secured therein; a first valve disposed in one of the first fluid port, second fluid port or third fluid port and constructed and arranged to block or control flow of fluid therethrough, the first valve having a first face; a valve actuator shaft extending into one of the first fluid port, second fluid port, or third fluid port and operatively connected to the first valve; a second valve connected to the first valve by a stem portion different from the shaft, the second valve having a first face being constructed and arranged to be rotatable with the first valve and the valve shaft so that the shaft is rotatable to move the first valve between closed and open positions, the second valve is moved to a position that will block at least a portion of another of the first valve port, second valve port, or third valve port to restrict the flow of fluid therethrough, and wherein the first valve having a first face arranged at an angle with respect to a first face of the second valve.

Another embodiment includes a first valve connected to a second valve, and wherein the second valve includes a visor portion.

Other exemplary embodiments of the invention will become apparent from the detailed description provided hereinafter. It should be understood that the detailed description and specific examples, while disclosing exemplary embodiments of the invention, are intended for purposes of illustration only and are not intended to limit the scope of the invention.

### BRIEF DESCRIPTION OF THE DRAWINGS

Exemplary embodiments of the invention will become more fully understood from the detailed description and the accompanying drawings, wherein:
Figure 1 is an illustration of an engine breathing system useful with one embodiment of the invention.
Figure 2 is an illustration of an engine breathing system useful with one embodiment of the invention.
Figure 3 is an illustration of a value assembly including a valve housing and ECU component of which are useful in one embodiment of the invention.
Figure 4 is an illustration of the valve assembly of Figure 3 with portions removed.
Figure 5 is an illustration of valve assembly including a valve housing having three ports that is useful in one embodiment of the invention.
Figure 6 is an illustration the valve assembly of Figure 5 with portions removed.
Figure 7 is an illustration of a valve assembly according to one embodiment of the invention.
Figure 8 is an illustration of a valve assembly of Figure 7 with portions removed.
Figure 9 is an illustration of a valve assembly according to another embodiment of the invention.
Figure 10 is an illustration of a valve assembly according to another embodiment of the invention.
Figure 11 is an illustration of a valve assembly according to another embodiment of the invention.
Figure 12 is an illustration of a valve assembly according to another embodiment of the invention wherein the valve housing is a continuous single piece of material that is not joined.
Figure 13 is an illustration of a valve assembly according to another embodiment of the invention wherein the valve housing includes at least two housing components joined together.
Figure 14 is an illustration of a valve assembly according to another embodiment of the invention with portions in a partially exploded view wherein the valve housing includes at least two housing components joined together.
Figure 15 is an illustration of a valve assembly according to another embodiment of the invention.
Figure 16 is an illustration of a valve assembly according to another embodiment of the invention in a sectional view.
Figure 17 is an illustration of a valve assembly according to another embodiment of the invention in sectional view showing a valve having a visor portion.
Figure 18 is an illustration of a valve according to one embodiment of the invention.

### DETAILED DESCRIPTION OF EXEMPLARY EMBODIMENTS

The following description of the embodiment(s) is merely exemplary (illustrative) in nature and is in no way intended to limit the invention, its application, or uses.

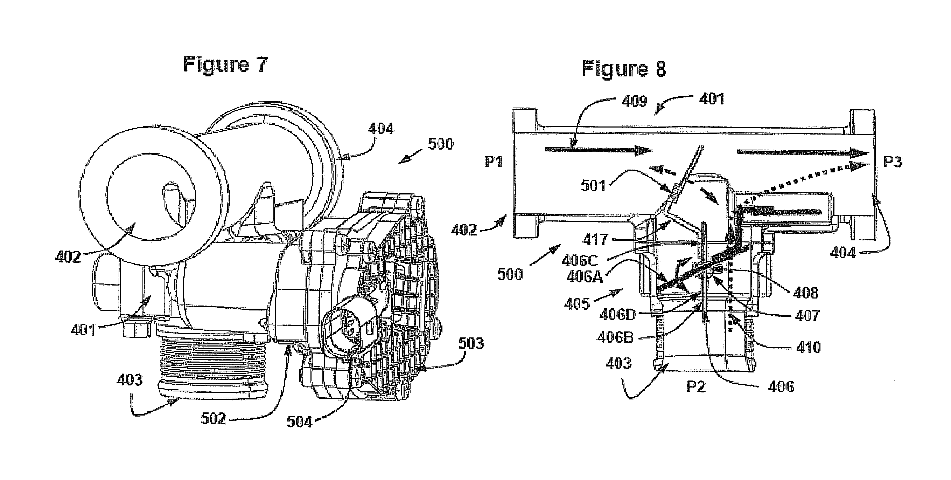

Figure 7 and Figure 8 show one embodiment of a multifunction valve (MFV) 500 that is similar in some respect to valve assembly 400 shown in Figure 5 and Figure 6. Similar identification numbers will be used for Figure 7 and Figure 8. A second valve 501 has been attached to the throttle plate 406, by a stem portion 417, using suitable means such as, but not limited to, screws, rivets, brazing, soldering, rivets formed in throttle plate 406, or adhesive. Stem portion 417 may be a separate component or it may be formed as a portion of either second valve 501 or throttle plate 406. The second valve 501 may also be attached to the valve shaft 407 or combination of the valve shaft 407 and throttle plate 406.

The multifunction valve will operate in the following manner. The closed throttle plate position 406B is shown by solid lines and the open throttle plate position 406B is shown only by outline. When shaft 407 progressively rotates the throttle plate 406 from the close position 406A to open position 406B, the fluid flow through port 403 will progressively increase and the differential pressure, P2-P3, between ports 403 and 404 will progressively decrease. At a desired position in the rotation of the valve shaft 407, it will cause the second valve 501 to move into the flow path of port 402 causing restriction (or throttling) of the fluid flow between ports 402 and 404. The restriction will increase the pressure differential, P1 - P3, between ports 402 and 404. It will also increase the pressure differential P2 - P3, between ports 403 and 404, and cause a higher fluid flow rate between ports 403 and 404. As the valve shaft 407 continues to rotate throttle plate 406, towards the full open position 406B, the second valve 501 moves further into the flow path of port 402 and further restricts fluid flow through port 402 to port 404.

The increased restriction will cause a higher pressure differential, P2 - P3 between ports 403 and 404 and higher fluid flow between ports 403 and 404.

It may also be noted the pressures will result in forces being applied to second valve 501 and throttle plate 406 that will tend to move second valve 501 out of the flow path of port 402 and port 404. It will also move throttle valve 406 toward the throttle plate closed position 406A. This may act as a desirable failsafe during some conditions such as electrical power loss to the actuator.

An actuator housing 502 contains a D.C. motor actuator similar to that used in the typical throttle valve shown in Figures 3 and 4 and described herein. The actuator is operably connected to the valve shaft 407. In a similar manner the D.C. motor actuator is controlled by a signal from an engine control unit (ECU) 280 shown in Figure 3. A cover 503 is attached to the actuator housing 502. The cover includes an electrical connector-and-lead-frame 504 for receiving the control signal from the ECU 280 and connecting it to the D.C. motor.

The D.C. motor will receive the control signal from the ECU and will force the valve shaft 407 and valve plate 406 to rotate to predetermined positions between the closed throttle plate position 406A and the open throttle plate position 406B to control the combined fluid flow from ports 402 and 403 to outlet port 404. The actuator will also control the movement and position of the second valve 501within the flow path of port 402 causing restriction of the fluid flow between ports 402 and 404. The increased restriction will cause a higher pressure differential across throttle plate 406 and higher fluid flow between ports 403 and 404.

The electrical connector and lead frame are also connected to a position sensor similar to that used in the typical throttle valve shown in Figures 3 and 4 and described herein. The position sensor provides a feedback voltage to the ECU 280 to determine valve position and flow to outlet 404.

The MFV shown in Figure 7 and Figure 8 will be suitable for replacing throttle valve 32 and EGR valve 246 used on the air inlet side of engine system 210 shown in Figure 2.

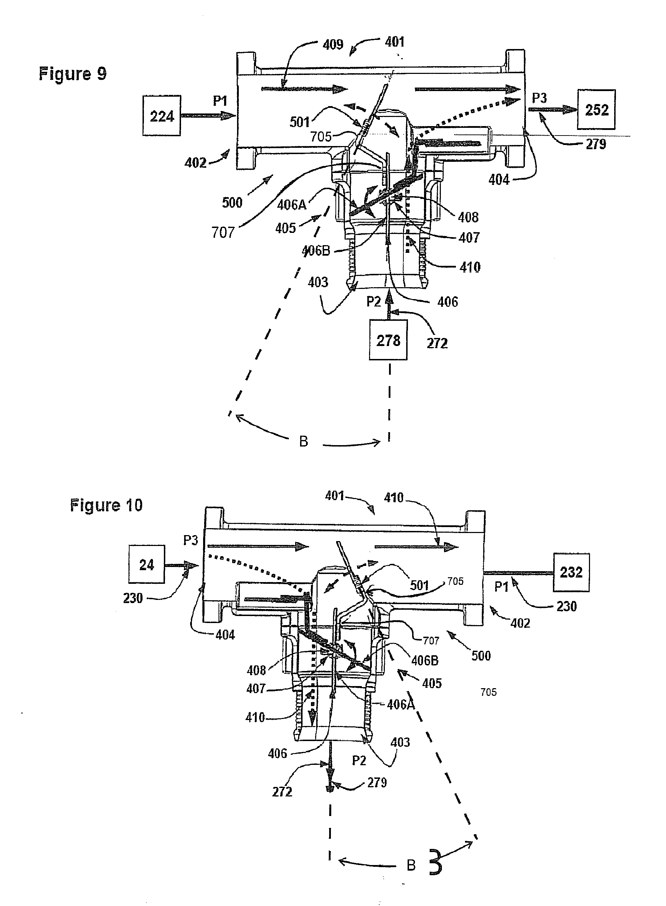

Figure 9 shows MFV 500 and connections to engine system 210 shown in Figure 2. Incoming air 409 from air inlet 224 is received at port 402. Exhaust gas is delivered to port 403 via EGR cooler 278 and conduit 272. D.C. motor actuator (previously described herein) will operably move valve shaft 407 and throttle plate 406 to a predetermined position between the throttle plate closed position 406A and throttle plate open position 406B allowing a portion of exhaust gas 410 and inlet air 409 to flow to compressor 252 via outlet 404 and conduit 279. Additional exhaust gas 410 flow is achieved by further rotating valve shaft 407; throttle plate 406, and moving second valve 510 to restrict incoming air flow between ports 402 and 404. The higher flow restriction will increase the pressure differential, P2 - P3, between port 403 and port 404 causing a higher exhaust gas 410 flow rate between ports 403 and port 404.

The electrical connector and lead frame are connected to a DC motor and a position sensor previously described herein. A vehicle ECU will provide a control signal to the DC motor actuator that will rotate the valve shaft 407, throttle plate 406, and second valve 510. The position sensor provides a feedback voltage positive signal to the ECU to determine the throttle plate and second valve position and the flow of exhaust gas 410 and inlet air 409 to port 404.

The MFV shown in Figure 7and Figure 8 will also be suitable for replacing throttle valve 32 and EGR valve 246 used on the exhaust side of the engine system 210 shown in Fig. 2. Only exhaust gas 410 will flow through the MFV 500 when it is used on the exhaust side of the engine system 210. The flow of exhaust gas is represented by both solid an dashed lines in the figures.

Figure 10 shows MFV 500 and connections to engine system 210 similar to that shown in Figure 2. Incoming exhaust gas 410 is received at port 404 via after treatment device 24 and conduit 230. Exhaust gas 410 is delivered to the exhaust outlet 232 via valve housing 401, port 403, and circuit 230. A DC motor actuator as described herein may be used to operably move valve shaft 407 and throttle plate 406 to a predetermined position, between the throttle plate closed position 406A and throttle plate open position 406B, allowing a portion of the exhaust gas 410 to flow to port 403. Conduit 272 and conduit 279 brought the exhaust gas to the intake manifold 218 of the engine system 210 similar to that shown in Figure 2. Additional exhaust gas 410 flow is achieved by further rotating the valve shaft 407, throttle plate 406, and moving second valve 510 to restrict gas flow 410 between ports 404 and 402. The higher flow restriction will increase the pressure differential, P3-P2, between port 404 and port 403 causing a higher exhaust gas 410 flow rate between ports 404 and port 403.

In operation, pressures will result in forces being applied to second valve 501 and throttle plate 406 that will tend to move second valve 501 into the flow path of port 402 and port 404. Forces will also move throttle valve 406 toward the throttle plate open position 406B. This may not be desirable because during some engine operating conditions, high forces, resulting from the pressure, could cause second valve 501 to block the exhaust outlet 232. This may result in high exhaust pressure P3-P1 between port 404 and port 402 that may cause poor engine performance and reduce fuel economy. This may also create a higher flow of exhaust gas 410 that may affect engine emissions.

Referring again to Figures 9-10, in various embodiments the first valve 406 may have a first face 701 arranged at an angle B with respect a first face 703 of the second valve 501. The B may be less than less than 180 degrees, less than 90 degree or 10-80 degrees. In another embodiment the first valve 406 may have a first face 701 arranged in a non-parallel manner with respect a first face 703 of the second valve 501. In one embodiment the stem portion 417 may include at least one end portion 705 which may be bend in a first direction. In another embodiment the stem portion may include a second end portion 707 which may be bend in a direct different or the opposite of the first end portion 705.

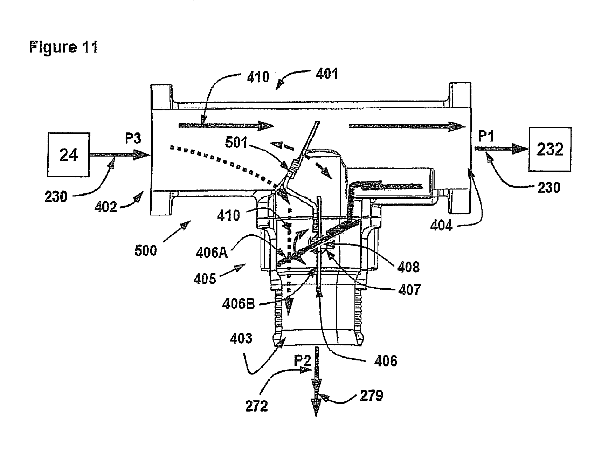

Figure 11 shows MFV 500 configured with the engine system 210 as shown in Figure 2, to reverse the direction of force and move second valve 501 out of the flow path of port 402 and port 404. It will also move throttle valve 406 toward the throttle plate closed position 406B. The valve will operate in a similar manner to that shown in Figure 10 and described herein.

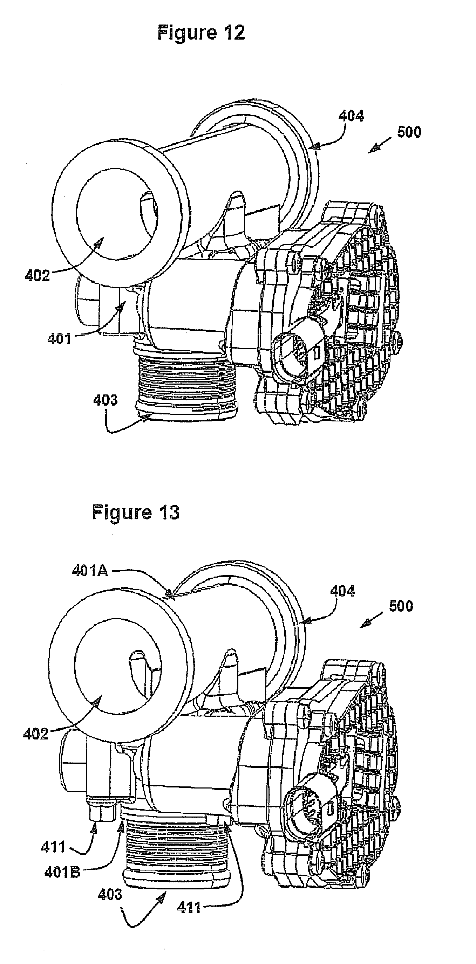

MFV 500 may be constructed using several methods. For example, the valve shaft 407 and throttle place 406 may be installed in port 403. Port 403 may be formed as a portion of the housing 401, as shown in Figure 12. It may also be a separate housing 401 B that is fastened by bolts 411 to another housing 401A as shown in Figure 13.

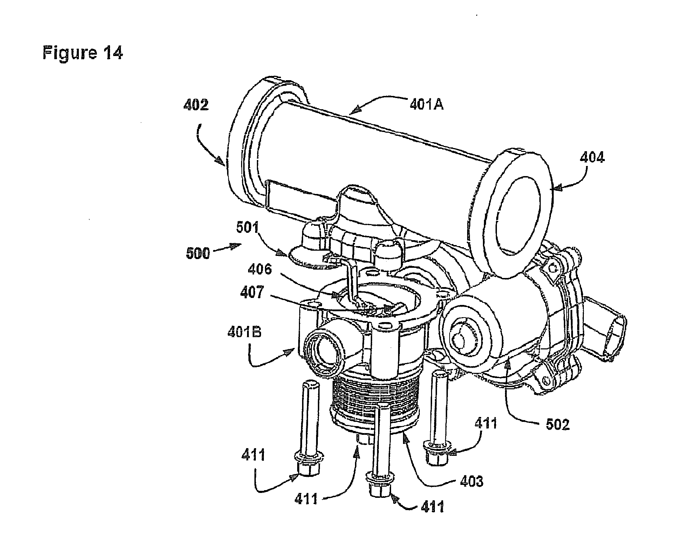

Figure 14 shows an exploded view of the MFV assembly shown in Figure 13. Referring to Figure 14, the valve shaft 407 and throttle plate 406 have been installed in the housing 401 B. Port 403 and actuator housing 502 have also been formed as portions of the housing 401 B. Bolts 411 extend through the housing 40B or engagement with the housing 40A to combine and secure the two housings. Ports 402 and 404 have been formed as portions of housing 40A. Port 402 and Port 404 also may be made as individual components and fastened to housing 401A or housing 401 B.

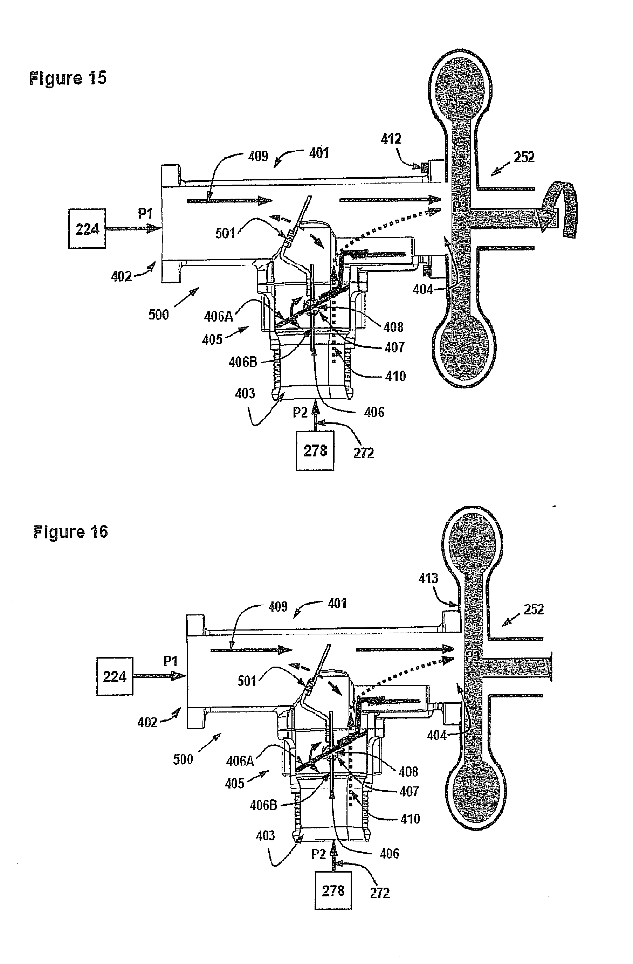

The MFV 500 may also be integrated with another system component. For example, Figure 15 shows the MFV attached directly to the compressor 252 using fasteners such as bolts 412 or it may be formed as a portion of the compressor housing 413 as shown in Figure 16. Other components such as after treatment components 24 (for example, a diesel particular trap and/or catalytic converter) may also be suitable for integrating the MFV 500.

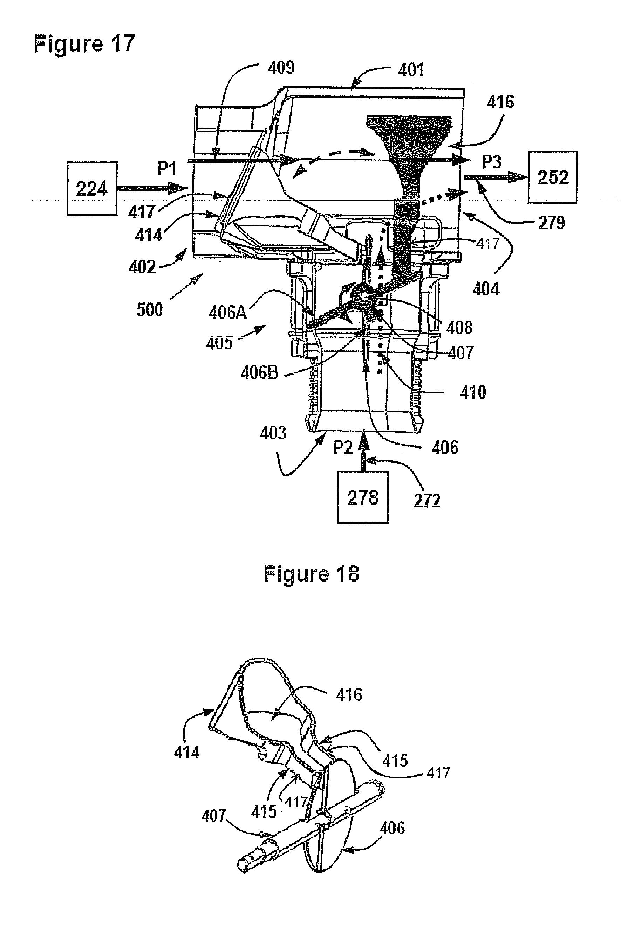

Second valve 500 has been shown as a disc shaped valve assembly that is attached to throttle plate 406. Alternative style valves may also be used. Figure 17 shows another alternative valve 414 installed into a similar MVF assembly 500. Similar numerals have been used to identify similar components. The valve may fit within the flow path between ports 402 and 404 and is attached to throttle plate 406 or valve 407 in a manner similar to valve 501. Referring to Figure 18, an alternative embodiment of second valve 414 is shaped like a visor and is attached to the throttle plate by one or more stem portions 417 or tab portions 415 that may be formed as a part of the valve 414.

The multi-function valve 500 may operate in the following manner. When throttle plate 406 is in closed position 40A, there will be a low restriction to fluid flow between ports 402 and 404. The fluid will pass around alternative second valve 414 and through the central opening 416 of alternative second valve 414. The shaft 407 may be progressively rotated so that throttle plate 406 moves from the closed position 40A to open position 406B, wherein the flow through port 403 is progressively increased and the differential pressure, P3-P2, between ports 403 and 404 will progressively decrease. At a desired position in the rotation of the valve shaft 407, the alternative second valve 141 is moved into the flow path of port 402 causing the face 417 of the alternative valve 414 to restrict (or throttle) fluid flow between ports 402 and 404. Alternative second valve 414 will operate and function in a similar manner to the second valve 401 described herein. Alternative valve 414 may provide for compact packaging within the valve body 401.

## Claims

1. A product comprising a valve housing (401) constructed and arranged to have a first port (402) for receiving and delivering a first fluid or second fluid, a second port (403) for receiving or delivering a first fluid or second fluid, and a third port (404) for receiving or delivering the first fluid, the second fluid, or mixture comprising the first fluid and the second fluid;
a first valve (406) disposed in one of the first port (402), second port (403) or third port (404), the first valve (406) constructed and arranged to fit within the port to block or control the flow of the first fluid or second fluid through the port;
a valve shaft (407) having a longitudinal axis (408) and extending into only one of the first port (402), second port (403) or third port (404) and connected to the first valve at a central location, the first valve (406) having approximately equal areas extending on either side of the shaft and the axis, the shaft being rotatable about the axis (408) to move the first valve (406) to a closed position (406A), open position (406B) or positions therebetween to block flow or control a portion of the first fluid or second fluid flowing to the first port (402), second port (403), or third port (404);
a second valve (501) operatively connected to the first valve (406) and rotatable with the first valve (406) and the valve shaft (407), wherein the valve shaft (407) is rotatable to move the first valve (406) between the closed position (406A) and opened positions (406B), and so that the second valve (501) is moveable to a position that will block at least a portion of first port (402), second port (403), or third port (404) and restrict the flow the first fluid or second fluid flowing to the first port (402), second port (403), or third port (404), **characterized in that** the second valve (501) is movable to a position out of the flow paths between the first port (402) and the third port (404).

2. A product as set forth in Claim 1 wherein the second valve (501) is operatively connected to the first valve (406) or valve shaft (407) by at least one of screws, rivets, rivets formed in said first valve (406), welding, brazing, soldering, or adhesive.

3. A product as set forth in Claim 1 wherein the second valve (501) is formed of a continuous uniform material of the first valve (406) and wherein the first valve (406) and second valve (501) are not connected together by joined parts.

4. A product as set forth in Claim 1 wherein the product is constructed and arranged so that fluid flow is controlled by a radial clearance or a lack of radial clearance between the first valve (406) and the port receiving the first valve (406).

5. A product as set forth in Claim 1 wherein the first port (402), the second port (403), the third port (404), or combination thereof, are defined by separate structural housing components that are operatively connected to form the valve housing (401).

6. A product as set forth in Claim 1 wherein the valve housing (401) comprises a plurality of housing components joined together.

7. A product as set forth in Claim 1 further comprising an actuator operatively connected to the valve shaft (407) constructed and arranged to rotate and position the shaft, the actuator being selected from the group of vacuum/pressure motors, DC motor, torque motor, stepper motor, or linear solenoid.

8. A product as set forth in Claim 1 further comprising a position sensor operatively connected to the valve shaft (407) constructed and arranged to provide a position signal that indicates the position of the valve shaft (407) and the first valve (406), the position sensor being selected from the group consisting of inductive, Hall effect, magneto-resistive or resistive sensors.

9. A product as set forth in Claim 1 further comprising a position sensor operatively connected to the valve shaft (407) constructed and arranged to determine the position of the second valve (501).

10. A product as set forth in Claim 1 further comprising a component operatively connected to the valve housing (401), the component being in fluid communication for receiving and delivering the first fluid, the second fluid or a mixture of the first fluid and the second fluid.

11. A product as set forth in Claim 10 wherein the component is one of a turbocharger, exhaust after treatment device, engine exhaust system, engine air induction system, engine intake manifold, or exhaust manifold.

12. A product as set forth in claim 1 wherein the second valve (501) comprises a visor portion.

13. A product as set forth in claim 1 wherein the first valve (406) has a first face (701) and the second valve (501) has a first face (703), and wherein first face (701) of the first valve (406) is arranged at an angle with respect a first face (703) of the second valve (501).

14. A product as set forth in claim 1 wherein:
the first port (402) is for receiving air, the second port (403) is for receiving exhaust gas, and the third port (404) is for delivering air, exhaust gas, or a combination of air and exhaust gas;
the first valve (406) is disposed in the second port (403); the valve shaft (407) extends into only the second port (403);
when the valve shaft (407) is rotated to move the first valve (406) between the closed and open positions, the second valve (501) is moved to a position that will block at least a portion of the first port (402) and restrict the flow of air to the third port (404) and when the first valve (406) is rotated to the closed position (406A),
the second valve (501) is moved to a position out of the flow path between the first port (402) and the third port (404).

15. A product as set forth in claim 1 wherein the product is an EGR valve (4), and further comprising:
an internal combustion engine (1) having an induction system for receiving combustion air and an exhaust system for removing exhaust gas from the combustion engine (1);
an exhaust gas recirculation (EGR) system for returning a portion of the exhaust gas to the induction system;
an actuator operatively connected to the valve shaft (407) for rotating and positioning the valve shaft (407), the actuator being selected from one of vacuum/pressure motors, DC motors, torque motors, stepper motors, or linear solenoids;
a position sensor operatively connected to the valve shaft (407) for providing a position signal indicating the position of the valve shaft (407) and the first valve (406), the position sensor being one of an inductive, Hall effect, magneto-resistive or resistive sensor; and
an electrical control unit (11) connected to the actuator and the position sensor for providing the control signal to the actuator and receiving position signal for the valve shaft (407), wherein the electrical control unit (11) provides the control signal to the actuator, the actuator will selectively position the valve shaft (407), the first valve (406) and the second valve (501) to control the flow of exhaust gas through the EGR valve (4) and the position sensor provides a position sensor signal that will indicate the position of the valve shaft (407).

## Patentansprüche

1. Produkt, umfassend ein Ventilgehäuse (401), das zum Aufweisen einer ersten Öffnung (402) zum Aufnehmen und Abgeben eines ersten Fluids oder eines zweiten Fluids, einer zweiten Öffnung (403) zum Aufnehmen und Abgeben eines ersten Fluids oder eines zweiten Fluids und einer dritten Öffnung (404) zum Aufnehmen oder Abgeben des ersten Fluids, des zweiten Fluids oder einer Mischung, die das erste Fluid und das zweite Fluid umfasst, gebaut und angeordnet ist;
ein erstes Ventil (406), das in der ersten Öffnung (402), der zweiten Öffnung (403) oder der dritten Öffnung (404) angeordnet ist, wobei das erste Ventil (406) so gebaut und angeordnet ist, um in die Öffnung zu passen, um die Strömung des ersten Fluids oder des zweiten Fluids durch die Öffnung zu blockieren oder zu steuern;
eine Ventilwelle (407) mit einer Längsachse (408), die sich in nur eine von der ersten Öffnung (402), der zweiten Öffnung (403) oder der dritten Öffnung (404) erstreckt und mit dem ersten Ventil an einer zentralen Stelle verbunden ist, wobei das erste Ventil (406) etwa gleiche Bereiche aufweist, die sich auf beiden Seiten der Welle und der Achse erstrecken, wobei die Welle um die Achse (408) zum Bewegen des ersten Ventils (406) zu einer geschlossenen Position (406A), zu einer offenen Position (406B) oder zu Positionen dazwischen drehbar ist, um die Strömung zu blockieren oder einen Anteil des ersten Fluids oder zweiten Fluids, der zu der ersten Öffnung (402), der zweiten Öffnung (403) oder der dritten Öffnung (404) strömt, zu steuern;
ein zweites Ventil (501), das betriebswirksam mit dem ersten Ventil (406) verbunden ist und mit dem ersten Ventil (406) und der Ventilwelle (407) drehbar ist, wobei die Ventilwelle (407) zum Bewegen des ersten Ventils (406) zwischen der geschlossenen Position (406A) und den offenen Positionen (406B) gedreht werden kann, sodass das zweite Ventil (501) zu einer Position bewegt werden kann, bei der mindestens ein Abschnitt der ersten Öffnung (402), der zweiten Öffnung (403) oder der dritten Öffnung (404) blockiert wird und die Strömung des ersten Fluids oder des zweiten Fluids, die zu der ersten Öffnung (402), zweiten Öffnung (403) oder dritten Öffnung (404) strömen, beschränkt,
**dadurch gekennzeichnet, dass** das zweite Ventil (501) zu einer Position beweglich ist, die außerhalb der Strömungswege zwischen der ersten Öffnung (402) und der dritten Öffnung (404) ist.

2. Produkt nach Anspruch 1, wobei das zweite Ventil (501) betriebswirksam über mindestens eines von Schrauben, Nieten, Nieten, die in dem ersten Ventil (406) ausgebildet sind, Schweißen, Hartlöten, Löten oder Klebstoff mit dem ersten Ventil (406) oder der Ventilwelle (407) verbunden ist.

3. Produkt nach Anspruch 1, wobei das zweite Ventil (501) aus einem durchgehenden einheitlichen Material des ersten Ventils (406) ausgebildet ist und wobei das erste Ventil (406) und das zweite Ventil (501) nicht über zusammengefügte Teile miteinander verbunden sind.

4. Produkt nach Anspruch 1, wobei das Produkt derart gebaut und angeordnet ist, dass die Fluidströmung von einem radialen Abstand oder einem fehlenden radialen Abstand zwischen dem ersten Ventil (406) und der Öffnung, die das erste Ventil (406) aufnimmt, gesteuert wird.

5. Produkt nach Anspruch 1, wobei die erste Öffnung (402), die zweite Öffnung (403), die dritte Öffnung (404) oder eine Kombination davon von separaten Strukturgehäusekomponenten definiert werden, die betriebswirksam zum Bilden des Ventilgehäuses (401) verbunden sind.

6. Produkt nach Anspruch 1, wobei das Ventilgehäuse (401) mehrere Gehäusekomponenten umfasst, die zusammengefügt sind.

7. Produkt nach Anspruch 1, ferner umfassend ein Stellglied, das betriebswirksam mit der Ventilwelle (407) verbunden ist und zum Drehen und Positionieren der Welle gebaut und angeordnet ist, wobei das Stellglied aus der Gruppe, bestehend aus Vakuum-/Druckmotoren, Gleichstrommotor, Drehmomentmotor, Schrittmotor oder Hubmagnet ausgewählt ist.

8. Produkt nach Anspruch 1, ferner umfassend einen Positionssensor, der betriebswirksam mit der Ventilwelle (407) verbunden ist und gebaut und angeordnet ist, um ein Positionssignal bereitzustellen, das die Position der Ventilwelle (407) und des ersten Ventils (406) anzeigt, wobei der Positionssensor ausgewählt ist aus der Gruppe, bestehend aus induktiven, Hall-Effekt-, magnetoresistiven oder resistiven Sensoren.

9. Produkt nach Anspruch 1, ferner umfassend einen Positionssensor, der betriebswirksam mit der Ventilwelle (407) verbunden ist und gebaut und angeordnet ist, um die Position des zweiten Ventils (501) zu bestimmen.

10. Produkt nach Anspruch 1, ferner umfassend eine Komponente, die betriebswirksam mit dem Ventilgehäuse (401) verbunden ist, wobei die Komponente in Fluidverbindung zum Aufnehmen und Abgeben des ersten Fluids, des zweiten Fluids oder einer Mischung aus dem ersten Fluid und dem zweiten Fluid damit steht.

11. Produkt nach Anspruch 10, wobei die Komponente eine von Turbolader, Abgas-Nachbehandlungsvorrichtung, Motorabgassystem, Motorluft-Induktionssystem, Motoransaugkrümmer oder -abgaskrümmer ist.

12. Produkt nach Anspruch 1, wobei das zweite Ventil (501) einen Schirmabschnitt umfasst.

13. Produkt nach Anspruch 1, wobei das erste Ventil (406) eine erste Fläche (701) und das zweite Ventil (501) eine erste Fläche (703) aufweisen, und wobei die erste Fläche (701) des ersten Ventils (406) in einem Winkel bezüglich einer ersten Fläche (703) des zweiten Ventils (501) angeordnet ist.

14. Produkt nach Anspruch 1, wobei:
die erste Öffnung (402) zum Aufnehmen von Luft dient, die zweite Öffnung (403) zum Aufnehmen von Abgas dient, und die dritte Öffnung (404) zum Abgeben von Luft, Abgas oder einer Kombination aus Luft und Abgas dient;
wobei das erste Ventil (406) in der zweiten Öffnung (403) angeordnet ist; wobei sich die Ventilwelle (407) nur in die zweite Öffnung (403) erstreckt;
wobei, wenn die Ventilwelle (407) gedreht wird, um das erste Ventil (406) zwischen der geschlossenen und der offenen Position zu bewegen, das zweite Ventil (501) in eine Position bewegt wird, die mindestens teilweise einen Abschnitt der ersten Öffnung (402) blockiert und die Strömung von Luft zu der dritten Öffnung (404) und, wenn das erste Ventil (406) in die geschlossene Position (406A) gedreht wird, beschränkt,
wobei das zweite Ventil (501) zu einer Position aus dem Strömungsweg zwischen der ersten Öffnung (402) und der dritten Öffnung (404) bewegt wird.

15. Produkt nach Anspruch 1, wobei das Produkt ein AGR-Ventil (4) ist und ferner umfasst:
eine Brennkraftmaschine (1) mit einem Induktionssystem zum Aufnehmen von Verbrennungsluft und einem Abgassystem zum Entfernen von Abgas aus der Brennkraftmaschine (1);
ein Abgasrückführsystem (AGR) zum Rückführen eines Anteils von Abgas zu dem Induktionssystem;
ein Stellglied, das betriebswirksam mit der Ventilwelle (407) zum Drehen und Anordnen der Ventilwelle (407) verbunden ist, wobei das Stellglied ausgewählt ist aus einem von Vakuum-/Druckmotoren, Gleichstrommotoren, Drehmomentmotoren, Schrittmotoren oder Hubmagneten;
einen Positionssensor, der betriebswirksam mit der Ventilwelle (407) verbunden ist, um ein Positionssignal bereitzustellen, das die Position der Ventilwelle (407) und des ersten Ventils (406) anzeigt, wobei der Positionssensor einer von Induktiv-, Hall-Effekt-, Magnetoresistiv- oder Resistivsensor ist; und
eine elektrische Steuereinheit (11), die mit dem Stellglied und dem Positionssensor verbunden ist, um dem Stellglied das Steuersignal bereitzustellen und das Positionssignal für die Ventilwelle (407) zu erhalten, wobei die elektrische Steuereinheit (11) das Steuersignal an das Stellglied bereitstellt, wobei das Stellglied die Ventilwelle (407), das erste Ventil (406) und das zweite Ventil (501) selektiv anordnet, um die Strömung von Abgas durch das AGR-Ventil (4) zu steuern und der Positionssensor ein Positionssensorsignal bereitstellt, das die Position der Ventilwelle (407) anzeigt.

## Revendications

1. Produit comprenant un carter de soupape (401) construit et agencé pour avoir un premier orifice (402) pour recevoir et distribuer un premier fluide ou un second fluide, un second orifice (403) pour recevoir ou distribuer un premier fluide ou un second fluide, et un troisième orifice (404) pour recevoir ou distribuer le premier fluide, le second fluide ou un mélange comprenant le premier fluide et le second fluide ;
une première soupape (406) disposée dans un orifice parmi le premier orifice (402), le second orifice (403) ou le troisième orifice (404), la première soupape (406) étant construite et agencée pour s'ajuster à l'intérieur de l'orifice pour bloquer ou contrôler le flux du premier fluide ou du second fluide à travers l'orifice ;
une tige de soupape (407) ayant un axe longitudinal (408) et s'étendant dans un orifice seulement parmi le premier orifice (402), le second orifice (403) ou le troisième orifice (404) et reliée à la première soupape au niveau d'un emplacement central, la première soupape (406) ayant des zones approximativement égales s'étendant sur un côté ou l'autre de la tige et de l'axe, la tige pouvant tourner autour de l'axe (408) pour déplacer la première soupape (406) vers une position fermée (406A), une position ouverte (406B) ou des positions intermédiaires pour bloquer le flux ou commander une partie du premier fluide ou du second fluide s'écoulant vers le premier orifice (402), le second orifice (403) ou le troisième orifice (404) ;
une seconde soupape (501) reliée en fonctionnement à la première soupape (406) et pouvant tourner avec la première soupape (406) et la tige de soupape (407), où la tige de soupape (407) peut tourner pour déplacer la première soupape (406) entre la position fermée (406A) et les positions ouvertes (406B), et de sorte que la seconde soupape (501) est mobile vers une position bloquant au moins une partie du premier orifice (402), du second orifice (403) ou du troisième orifice (404) et restreignant le flux du premier fluide ou du second fluide s'écoulant vers le premier orifice (402), le second orifice (403) ou le troisième orifice (404), **caractérisé en ce que** la seconde soupape (501) est mobile vers une position hors des voies de flux entre le premier orifice (402) et le troisième orifice (404).

2. Produit selon la revendication 1, dans lequel la seconde soupape (501) est reliée en fonctionnement à la première soupape (406) ou la tige de soupape (407) par au moins un élément parmi des vis, rivets, rivets formés dans ladite première soupape (406), par soudage, brasure, jointage ou par adhésif.

3. Produit selon la revendication 1, dans lequel la seconde soupape (501) est formée d'un matériau uniforme continu de la première soupape (406) et dans lequel la première soupape (406) et la seconde soupape (501) sont ne sont pas reliées ensemble par des parties jointes.

4. Produit selon la revendication 1, dans lequel le produit est construit et agencé de sorte que l'écoulement de fluide est commandé par un jeu radial ou une absence de jeu radial entre la première soupape (406) et l'orifice recevant la première soupape (406).

5. Produit selon la revendication 1, dans lequel le premier orifice (402), le second orifice (403), le troisième orifice (404) ou une combinaison de ceux-ci sont définis par des composants de carter structurels séparés reliés en fonctionnement pour former le carter de soupape (401).

6. Produit selon la revendication 1, dans lequel le carter de soupape (401) comprend une pluralité de composants de carter joints ensemble.

7. Produit selon la revendication 1, comprenant en outre un actionneur relié en fonctionnement à la tige de soupape (407) construite et agencée pour tourner et positionner la tige, l'actionneur étant sélectionné dans le groupe constitué par le groupe de moteurs à vide/pression, moteur CC, moteur de couple, moteur pas-à-pas ou solénoïde linéaire.

8. Produit selon la revendication 1, comprenant en outre un capteur de position relié en fonctionnement à la tige de soupape (407) construite et agencée pour fournir un signal de position indiquant la position de la tige de soupape (407) et de la première soupape (406), le capteur de position étant sélectionné dans le groupe constitué par les capteurs inductifs, à effet de Hall, magnétorésistifs ou résistifs.

9. Produit selon la revendication 1, comprenant en outre un capteur de position relié en fonctionnement à la tige de soupape (407) construite et agencée pour déterminer la position de la seconde soupape (501).

10. Produit selon la revendication 1, comprenant en outre un composant relié en fonctionnement au carter de soupape (401), le composant étant en communication fluide pour recevoir et distribuer le premier fluide, le second fluide ou un mélange du premier fluide et du second fluide.

11. Produit selon la revendication 10, dans lequel le composant est un élément parmi un turbocompresseur, un échappement placé après un dispositif de traitement, un système d'échappement de moteur, un système d'induction d'air de moteur, un collecteur d'admission de moteur ou un collecteur d'échappement.

12. Produit selon la revendication 1, dans lequel la seconde soupape (501) comprend une partie de visière.

13. Produit selon la revendication 1, dans lequel la première soupape (406) a un premier côté (701) et la seconde soupape (501) a un premier côté (703) et dans lequel le premier côté (701) de la première soupape (406) est agencé selon un angle par rapport à un premier côté (703) de la seconde soupape (501).

14. Produit selon la revendication 1, dans lequel :
le premier orifice (402) sert à recevoir de l'air, le second orifice (403) sert à recevoir les gaz d'échappement et le troisième orifice (404) sert à distribuer l'air, les gaz d'échappement ou une combinaison d'air et de gaz d'échappement ;
la première soupape (406) est disposée dans le second orifice (403) ; la tige de soupape (407) s'étend dans le second orifice (403) uniquement ;
lorsque la tige de soupape (407) est tournée pour déplacer la première soupape (406) entre les positions ouverte et fermée, la seconde soupape (501) est déplacée vers une position bloquant au moins une partie du premier orifice (402) et restreignant le flux d'air vers le troisième orifice (404) et lorsque la première soupape (406) est tournée vers la position fermée (406A), la seconde soupape (501) est déplacée vers une position sortant de la voie de flux entre le premier orifice (402) et le troisième orifice (404).

15. Produit selon la revendication 1, dans lequel le produit est une soupape EGR (4) et comprend en outre :
un moteur à combustion interne (1) ayant un système d'induction pour recevoir l'air de combustion et un système d'échappement pour retirer le gaz d'échappement provenant du moteur à combustion (1) ;
un système de recirculation des gaz d'échappement (EGR) pour ramener une partie des gaz d'échappement vers le système d'induction ;
un actionneur relié en fonctionnement à la tige de soupape (407) pour tourner et positionner la tige de soupape (407), l'actionneur étant sélectionné dans le groupe constitué par un élément parmi les moteurs à vide/pression, les moteurs CC, les moteurs de couple, les moteurs pas-à-pas ou les solénoïdes linéaires ;
un capteur de position relié en fonctionnement à la tige de soupape (407) pour fournir un signal de position indiquant la position de la tige de soupape (407) et de la première soupape (406), le capteur de position étant un élément parmi un capteur inductif, à effet de Hall, magnétorésistif ou résistif ; et
une unité de commande électrique (11) reliée à l'actionneur et au capteur de position pour envoyer le signal de commande à l'actionneur et recevoir le signal de position pour la tige de soupape (407), dans lequel l'unité de commande électrique (11) envoie le signal de commande à l'actionneur, l'actionneur positionnant de manière sélective la tige de soupape (407), la première soupape (406) et la seconde soupape (501) pour commander le flux de gaz d'échappement à travers la soupape EGR (4) et le capteur de position envoie un signal de capteur de position indiquant la position de la tige de soupape (407).
